(19) Europäisches Patentamt / European Patent Office / Office européen des brevets

(11) **EP 4 553 458 A1**

(12) **EUROPEAN PATENT APPLICATION**

(43) Date of publication:
14.05.2025  Bulletin 2025/20

(21) Application number: 24211340.5

(22) Date of filing: 07.11.2024

(51) International Patent Classification (IPC):
*G01F 1/66* (2022.01)      *G01F 1/667* (2022.01)

(52) Cooperative Patent Classification (CPC):
G01F 1/667; G01F 1/662

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  07.11.2023  JP 2023189898

(71) Applicant: Qdot Co., Ltd.
Sendai-shi, Miyagi 981-0913 (JP)

(72) Inventor: TAKEDA, Yasushi
Miyagi, 9810913 (JP)

(74) Representative: Betten & Resch
Patent- und Rechtsanwälte PartGmbB
Maximiliansplatz 14
80333 München (DE)

(54) **ULTRASONIC FLOW RATE MEASUREMENT DEVICE FOR RECTANGULAR TUBE PORTION**

(57)  [Problem] To provide: an ultrasonic flow rate measurement device for a rectangular tube portion that can relax installation conditions, eliminate the need for calibration and verification, simplify maintenance, and perform highly accurate instantaneous flow rate measurement conforming to the definition of flow rate. [Solution] The present invention has: the flow rate calculation unit 5 calculates a local average flow velocity for each of the ultrasonic wave emission units 2 on the basis of the reception result of the ultrasonic pulse transmitted from the ultrasonic processing unit 4 for each of the ultrasonic wave reception units 3, and calculates the intra-tube flow rate by a sum of local flow rates obtained by multiplying the local average flow velocity by a local area for each of the ultrasonic wave emission units 2.

Fig.2

**Description**

BACKGROUND OF THE INVENTION

(1) Field of the Invention

The present invention relates to an ultrasonic flow rate measurement device that measures a flow rate of a measurement target fluid flowing in a pipe by ultrasonic waves, and particularly relates to an ultrasonic flow rate measurement device for a rectangular tube portion used for a rectangular tube portion formed in a rectangular shape in a pipe.

(2) Description of Related Art

Pipes (pipelines) are excellent in transporting fluids such as liquids and gases without leaking them to the outside, and are often used not only in factories but also in familiar places such as water pipes. In addition, it is very important to grasp the amount of the transported fluid in quality control and the like.

Therefore, devices for measuring flow rates in various tubes have been developed so far. In particular, ultrasonic flow meters are used in many situations because they utilize ultrasonic waves, which can transmit the tube wall, and have advantages such as being able to measure without directly contacting the fluid.

A general ultrasonic flow meter emits (enters) an ultrasonic pulse to a measurement target fluid in a pipe. When passing at a sound velocity, the ultrasonic pulse flies at a speed obtained by adding or subtracting an average flow velocity of the measurement target fluid. Therefore, the general ultrasonic flow meter calculates the average flow velocity from a flight time, and multiplies the average flow velocity by a cross-sectional area of the pipe to calculate an average flow rate. As such an ultrasonic flow meter, JP 2023-35287 A proposes a clamp-on type ultrasonic flow rate sensor that can be attached to an existing pipe (JP 2023-35287 A).

In addition, in JP 6321316 B2, the inventor of the present application has proposed an ultrasonic flow rate measurement device capable of calculating a flow rate of a measurement target fluid in a pipe from a shift amount that is a difference between a reference sound pressure distribution waveform based on an ultrasonic pulse emitted from a transmitter in a state where a flow velocity is 0 and entering a receiver and a variable sound pressure distribution waveform based on an ultrasonic pulse emitted from a transmitter in a state where the flow velocity is other than 0 and entering a receiver, and has obtained a patent right (JP 6321316 B2).

Further, JP H5-223608 A proposes an ultrasonic flow meter that measures a flow rate of a fluid in a pipe using a plurality of transducers that transmit ultrasonic waves and receive the ultrasonic waves, in which a measurement tube portion is formed between an upstream side and a downstream side of the tube so as to have a rectangular cross section, and the transducers are attached to outer walls of parallel surfaces of the measurement tube portion.

SUMMARY OF THE INVENTION

However, in the general ultrasonic flow meter including the invention described in JP 2023-35287 A, since the flow rate is calculated using the average flow velocity obtained by integrating the flow velocity distribution on one path (on the measurement line) passing through the tube center, it is a measurement condition that the flow velocity distribution is axisymmetric (the same average flow velocity even when passing through other paths), and there is a problem of a large restriction on a place where the ultrasonic flow meter can be installed. For example, in the tube immediately after the bent pipe, the flow velocity distribution is not axisymmetric due to generation of a vortex or the like, and if the path is different, the average flow velocity is also different, so that the pipe cannot be installed. That is, strict setting conditions (securing of upstream and downstream straightening positions, and the like) are applied to the use. If it is installed in a place that is not axisymmetric, it is necessary to perform a special calibration or a test in a state where measurement conditions are matched.

In addition, the inventions described in JP 2023-35287 A and JP 6321316 B2 measure a flow rate in a circular tube used in a general pipe, and there is a problem that a circular tube that can be installed is limited by a curvature due to a limit of downsizing of an ultrasonic element. That is, while the ultrasonic element that emits and receives the ultrasonic wave is formed in a planar shape, the tube wall of the circular tube is formed by a curved surface, and thus the surface and the line are in contact with each other. In a case where the curvature of the circular tube is large (the diameter of the circular tube is small) with respect to the size of the ultrasonic wave element, the emitted ultrasonic wave is reflected by the wall surface and cannot transmit through the tube, which makes it difficult to perform measurement.

Therefore, the circular tube needs to have a sufficiently small curvature (the diameter of the circular tube is large) with respect to the size of the ultrasonic element, and for example, the diameter 1 or more of the circular tube is required with respect to the diameter 1 of the ultrasonic element. Further, when a plurality of ultrasonic elements are installed in a circular tube, the diameter of the circular tube needs to be larger as a prerequisite.

In addition, when the incident angle with respect to the circular tube exceeds a critical angle, there is also a problem that the ultrasonic pulse is reflected and cannot enter the circular tube. Therefore, in order to enable calculation of the flow rate from the average flow velocities on a plurality of parallel measurement lines (three sets of transmission/reception units in JP 6321316 B2), it is necessary to increase the diameter of the circular tube so as not to exceed the critical angle, or to dispose the ultrasonic element so as to be in direct contact with the fluid as disclosed in JP 6321316 B2.

Incidentally, the definition of the flow rate is represented by the product of the cross-sectional area and the average flow velocity orthogonal to the cross-sectional area, and the average flow velocity can be calculated by integrating the flow velocity of the entire cross-section. In a case where the flow in the tube is an orthogonal coordinate of xyz in which the flow direction is a z coordinate, in the conventional ultrasonic flow rate measurement device as described in JP H5-223608 A, although the ultrasonic wave can be integrated in the emitting direction (for example, x direction), the emitting position of the ultrasonic wave is different in the z direction, and the range of the integration in the y direction is different for each measurement line, so that there is also a problem that double integration is not accurately performed.

Further, in the invention described in JP H5-223608 A, when the interval between the transducers arranged to improve the accuracy is narrowed, there is a problem that the ultrasonic pulse emitted from other than the transducers facing each other on the reception side interferes, and the integrated value of the flow velocity in the emitting direction of the ultrasonic wave cannot be accurately measured.

The present invention has been made to solve the above problems, and an object of the present invention is to provide an ultrasonic flow rate measurement device for a rectangular tube portion that can relax installation conditions, eliminate the need for calibration and verification, simplify maintenance, and perform highly accurate instantaneous flow rate measurement conforming to the definition of flow rate.

In order to solve the problem of performing highly accurate flow rate measurement conforming to the definition of flow rate without being restricted by the flow velocity distribution in the pipe, an ultrasonic flow rate measurement device for a rectangular tube portion according to the present invention includes: an ultrasonic wave emission unit that is installed on one side surface of the rectangular tube portion and emits an ultrasonic pulse toward a measurement target fluid in the rectangular tube portion; an ultrasonic wave reception unit that receives the ultrasonic pulse having passed through the measurement target fluid in the rectangular tube portion; an ultrasonic processing unit that executes processing of emitting the ultrasonic pulse in the ultrasonic wave emission unit and processing of receiving the ultrasonic pulse in the ultrasonic wave reception unit; and a flow rate calculation unit that calculates an average flow velocity of the measurement target fluid flowing in the rectangular tube portion based on a reception result of the ultrasonic pulse received by the ultrasonic wave reception unit, and calculates an intra-tube flow rate by multiplying the average flow velocity by a cross-sectional area of the rectangular tube portion, wherein a plurality of the ultrasonic wave emission units are arranged on a same straight line orthogonal to a flow direction on the one side surface and installed at a same angle with respect to the one side surface, a plurality of the ultrasonic wave reception units are installed at positions respectively facing the plurality of ultrasonic wave emission units on an opposing side surface facing the one side surface, the ultrasonic processing unit causes each of the ultrasonic wave emission units to emit ultrasonic pulses having different frequencies from each other, determines whether or not the ultrasonic pulse received by the ultrasonic wave reception unit is an ultrasonic pulse emitted from the opposing ultrasonic wave emission unit on the basis of the frequency of the ultrasonic pulse, and transmits a reception result to the flow rate calculation unit when the ultrasonic pulse is the ultrasonic pulse emitted from the opposing ultrasonic wave emission unit, and the flow rate calculation unit calculates a local average flow velocity for each of the ultrasonic wave emission units on the basis of the reception result of the ultrasonic pulse transmitted from the ultrasonic processing unit for each of the ultrasonic wave reception units, and calculates the intra-tube flow rate by a sum of local flow rates obtained by multiplying the local average flow velocity by a local area for each of the ultrasonic wave emission units.

In addition, as one aspect of the present invention, in order to solve the problem of further improving the measurement accuracy of the flow rate, the one side surface on which the plurality of ultrasonic wave emission units is installed may be defined as a first side surface, the opposing side surface on which the plurality of ultrasonic wave reception units are installed may be defined as a first opposing side surface, a side surface different from the first side surface by 90 degrees may be defined as a second side surface, and a side surface facing the second side surface may be defined as a second opposing side surface, the plurality of other ultrasonic wave emission units may be arranged on a same straight line orthogonal to the flow direction on the second side surface and installed at a same angle with respect to the second side surface, the plurality of other ultrasonic wave reception units may be installed at positions facing the plurality of other ultrasonic wave emission units on the second opposing side surface, respectively, and the flow rate calculation unit may calculate, as the intra-tube flow rate, an average value of a first intra-tube flow rate calculated based on a local average flow velocity of each of the plurality of ultrasonic wave emission units on the first side surface and a second intra-tube flow rate calculated based on a local average flow velocity of each of the plurality of other ultrasonic wave emission units on the second side surface.

Further, as one aspect of the present invention, in order to solve the problem of enabling connection to the middle of the above-mentioned pipe without any condition on the shape or diameter of the pipe and facilitating setting, a rectangular tube having the rectangular tube portion formed in a rectangular shape and connecting portions connectable to other pipes at both ends of the rectangular tube portion may be included, the rectangular tube portion in the rectangular tube and each of the ultrasonic wave emission units may be integrally installed, and the rectangular tube portion and each of the ultrasonic wave reception units may be integrally installed.

According to the present invention, it is possible to relax installation conditions, omit calibration and verification, simplify maintenance, and perform highly accurate instantaneous flow rate measurement conforming to the definition of flow rate.

BRIEF DESCRIPTION OF THE DRAWINGS

FIG. 1 is a block diagram showing a first embodiment of an ultrasonic flow rate measurement device for a rectangular tube portion according to the present invention;
FIG. 2 is a perspective diagram showing a state in which an ultrasonic wave emission unit and an ultrasonic wave reception unit in the first embodiment are disposed in a rectangular tube;
FIG. 3 is a cross-sectional diagram simulating the rectangular tube, the ultrasonic wave emission unit, and the ultrasonic wave reception unit in the first embodiment;
FIG. 4 is a schematic diagram showing a second embodiment of the ultrasonic flow rate measurement device for a rectangular tube portion according to the present invention;
FIG. 5 is a perspective diagram showing a state in which an ultrasonic wave emission unit and an ultrasonic wave reception unit in the second embodiment are disposed in a rectangular tube portion; and
FIG. 6 is a schematic diagram showing an ultrasonic flow rate measurement device for a rectangular tube portion that is another embodiment and includes a straightening portion in a rectangular tube.

DETAILED DESCRIPTION OF PREFERRED EMBODIMENTS

Hereinafter, a first embodiment of an ultrasonic flow rate measurement device for a rectangular tube portion according to the present invention will be described with reference to the drawings.

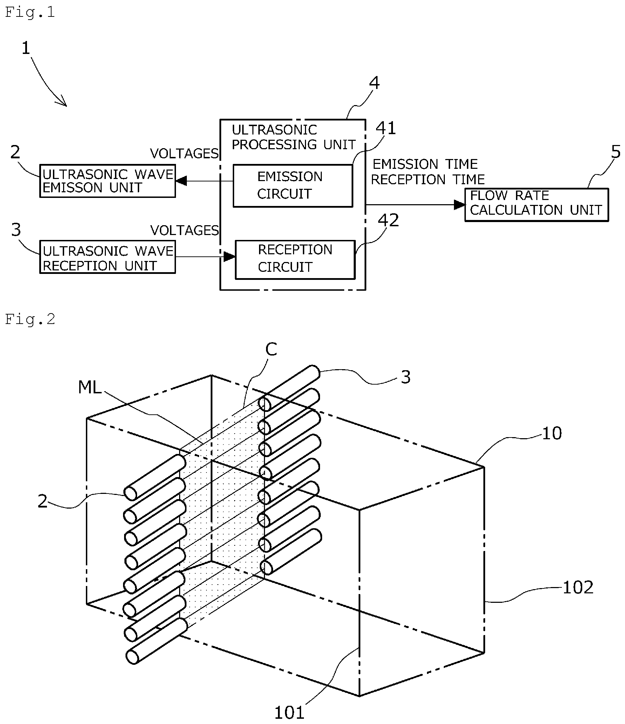

An ultrasonic flow rate measurement device 1 for a rectangular tube portion is a device that measures a flow rate of a measurement target fluid flowing in a rectangular tube portion 10 configured as a part of a factory pipe (pipeline) or the like in the rectangular tube portion 10. In the first embodiment, as shown in FIG. 1, the ultrasonic flow rate measurement device 1 includes an ultrasonic wave emission unit 2 that emits an ultrasonic pulse toward the measurement target fluid in the rectangular tube portion 10, an ultrasonic wave reception unit 3 that receives the ultrasonic pulse, an ultrasonic processing unit 4 that executes processing of emitting and processing of receiving the ultrasonic pulse, and a flow rate calculation unit 5 that calculates an intra-tube flow rate on the basis of a reception result of the ultrasonic pulse received by the ultrasonic wave reception unit 3. Hereinafter, each configuration will be described in detail.

The ultrasonic wave emission unit 2 is for emitting an ultrasonic pulse (a sound wave having a high frequency that cannot be heard by a human ear, the sound wave being emitted intermittently with a predetermined pulse width), and is constituted by a cylindrical ultrasonic transducer including a vibration element that vibrates according to a change in voltage at a tip.

In the first embodiment, the plurality of ultrasonic wave emission units 2 are installed on one side surface 101 of the rectangular tube portion 10. Specifically, as shown in FIG. 2, the plurality of ultrasonic wave emission units 2 are arranged in parallel at predetermined intervals on the same straight line orthogonal to the flow direction on the side surface 101 of the rectangular tube portion 10. Since the side surface 101 is formed in a planar shape unlike the outer peripheral surface of the curved circular tube, each of the ultrasonic wave emission units 2 can be installed at any position on the same straight line without being limited by a critical angle. Therefore, it is possible to set a large number of measurement lines by installing the ultrasonic wave emission units 2 close to each other, and it is also possible to measure the vicinity of the upper and lower walls, which is difficult with a circular tube due to the limitation of the critical angle, and it is possible to improve the measurement accuracy of the flow rate. In addition, the ultrasonic wave emission units 2 in the first embodiment are installed at the same angle with respect to the side surface 101. Each ultrasonic wave emission unit 2 is installed (clamped on) outside of the side surface 101 by a transducer holder (not shown) capable of holding each ultrasonic transducer at a predetermined angle.

As described above, the plurality of ultrasonic wave emission units 2 are installed side by side at the same angle and on the same straight line with respect to the side surface 101 of the rectangular tube portion 10, and thus, as shown in FIG. 2, the ultrasonic wave emission units 2 are configured to emit the ultrasonic pulse onto a plurality of measurement lines ML parallel along a predetermined rectangular cross section C in the rectangular tube portion 10.

Note that installation of each of the ultrasonic wave emission units 2 is not limited to the outside of the side surface 101 of the rectangular tube portion 10, and the ultrasonic wave emission unit 2 may be installed such that a hole is formed in the side surface 101 so that the tip of the ultrasonic transducer directly contacts the measurement target fluid.

The ultrasonic wave reception unit 3 receives an ultrasonic pulse passing through the measurement target fluid in the rectangular tube portion 10, and is constituted by a cylindrical ultrasonic transducer including at the tip a vibration element that vibrates upon receiving the ultrasonic wave to generate a voltage corresponding to the vibration. In the first embodiment, the same ultrasonic transducer as the ultrasonic wave emission unit is used.

In the first embodiment, as shown in FIG. 2, the plurality of ultrasonic wave reception units 3 are installed on an opposing side surface 102 facing the side surface 101 on which the ultrasonic wave emission units 2 are installed. The plurality of ultrasonic wave reception units 3 are installed (clamped on) at positions facing the plurality of ultrasonic wave emission units 2 by transducer holders (not shown). Since the opposing side surface 102 is formed in a planar shape similarly to the side surface 101, each ultrasonic wave reception unit 3 can be installed at an opposing position of the ultrasonic wave emission unit 2 without being limited by the critical angle.

Note that, in the first embodiment, as described later, one ultrasonic wave reception unit 3 is installed for one ultrasonic wave emission unit 2 in order to calculate the average flow velocity by the flight time of the ultrasonic pulse. However, the present invention is not limited thereto, and (2n + 1) (n is a natural number of 2 or more) ultrasonic wave reception units 3 may be installed for one ultrasonic wave emission unit 2 in a case where the average flow velocity is calculated based on the shift amount of the pressure waveform of the ultrasonic pulse by the configuration similar to the ultrasonic flow rate measurement device disclosed in JP 6321316 B2 disclosed by the inventor of the present application.

The ultrasonic processing unit 4 executes processing of emitting an ultrasonic pulse in the ultrasonic wave emission unit 2 and processing of receiving an ultrasonic pulse in the ultrasonic wave reception unit 3. In the first embodiment, the ultrasonic processing unit 4 includes an emission circuit 41 that applies a voltage of a predetermined frequency and cycle number to the ultrasonic wave emission unit 2, and a reception circuit 42 that transmits a voltage generated by the vibration element vibrating by the ultrasonic pulse received by the ultrasonic wave reception unit 3 to the flow rate calculation unit 5.

The emission circuit 41 is a circuit for applying a voltage to the ultrasonic wave emission unit 2 to emit an ultrasonic pulse. In the first embodiment, voltages of different frequencies are applied from the ultrasonic wave emission units 2, and the time when the voltage is applied to the ultrasonic wave emission unit 2 is transmitted to the flow rate calculation unit 5 as the emission time of the ultrasonic pulse.

The reception circuit 42 is a circuit for transmitting a voltage generated when the ultrasonic wave reception unit 3 receives an ultrasonic pulse to the flow rate calculation unit 5. In the first embodiment, it is determined whether or not the ultrasonic pulse is an ultrasonic pulse having a frequency emitted from the opposing ultrasonic wave emission unit 2 based on the voltage generated by the received ultrasonic pulse, and when the ultrasonic pulse is the ultrasonic pulse having a frequency transmitted from the opposing ultrasonic wave reception unit 3, the time when the ultrasonic pulse is received is transmitted to the flow rate calculation unit 5 as an arrival time indicating when the ultrasonic pulse reaches the ultrasonic wave reception unit 3. In the determination of the reception circuit 43 in the first embodiment, the frequency analysis of the ultrasonic pulse received by the ultrasonic wave reception unit 3 is performed, and when the analysis result includes the frequency of the ultrasonic pulse emitted from the opposing ultrasonic wave emission unit 2, it is determined that the ultrasonic pulse emitted from the opposing ultrasonic wave emission unit 2 has been received.

The flow rate calculation unit 5 calculates the flow rate conforming to the definition of flow rate based on the reception result of the ultrasonic wave reception unit 3. In the first embodiment, an average flow velocity is calculated based on the reception result of the ultrasonic pulse received by the ultrasonic wave reception unit 3, and the intra-tube flow rate is calculated by multiplying the average flow velocity by the cross-sectional area of the rectangular cross section C of the rectangular tube portion 10.

Here, when the definition of a flow rate Q is described, the flow rate Q is represented by a product of a cross-sectional area A and a velocity u(x) orthogonal to the cross-sectional area A as shown in the following equation.

$$Q = \int_A u(\vec{x})\, dA$$

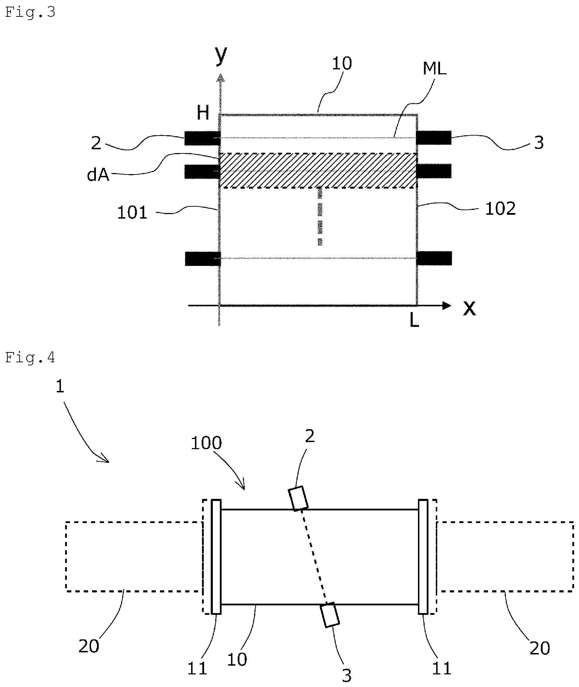

The pipe in the present invention is the rectangular tube portion 10, and as shown in FIG. 3, when the width direction of the rectangular tube portion 10 is x and the height direction is y, the equation can be rewritten to the following orthogonal coordinates.

$$= \iint u(x,y) \, dxdy$$

In addition, when the measurement line ML between the ultrasonic wave emission unit 2 and the ultrasonic wave reception unit 3 is taken to be parallel to the x-axis, it can be rewritten as follows.

$$= \int_0^H dy \int_0^L u(x,y) dx$$

Then, when the flow rate Q is integrated in the y-axis direction using the average flow velocity u(y) on one measurement line ML, the flow rate Q is expressed by the following equation.

$$= L \int_0^H \bar{u}(y) dy$$

That is, the flow rate Q of the measurement target fluid flowing through the rectangular tube portion 10 can be calculated by multiplying the average flow velocity u(y) on the measurement line ML and the average flow velocity by an area L·dy and integrating the results in the y-axis direction.

Here, the average flow velocity u(y) in actual measurement is expressed as a local average flow velocity $u_y$ measured by the ultrasonic wave emission unit 2 and the ultrasonic wave reception unit 3 installed at the position of y. In addition, the ultrasonic wave emission unit 2 and the ultrasonic wave reception unit 3 are installed at predetermined intervals, and when the interval is δ, the above equation can be rewritten as a difference equation as follows. A local area dA is represented by a product of L and δ. In the first embodiment, since many measurement lines including the vicinity of the wall can be set as described above, the interval δ can be narrowed to improve the measurement accuracy of the flow rate.

$$= L \sum_{y=0}^{H} u_y \delta$$

Note that the interval δ may be a constant value in which the ultrasonic wave emission unit 2 and the ultrasonic wave reception unit 3 are arranged at equal intervals in the y direction, or may be an interval different for each position in the y direction.

Therefore, the flow rate calculation unit 5 according to the first embodiment measures the flight time of the ultrasonic pulse from the time of being emitted from the ultrasonic wave emission unit 2 to the time of being received by the ultrasonic wave reception unit 3 for each ultrasonic wave emission unit 2. Specifically, the flight time is measured by a difference between the emission time transmitted from the emission circuit 41 and the arrival time transmitted from the reception circuit 42.

Next, the local average flow velocity $u_y$, which is a local average flow velocity between the ultrasonic wave emission unit 2 and the ultrasonic wave reception unit 3, is calculated based on the flight time. The local average flow velocity $u_y$ in the first embodiment is calculated by a calculation method based on an existing flight time, a difference between the flight time in a state where the measurement target fluid is not flowing and the flight time in a state where the measurement target fluid is flowing is calculated, and the local average flow velocity $u_y$ is calculated from the time difference and the flight distance from the ultrasonic wave emission unit 2 to the ultrasonic wave reception unit 3. The local average flow velocity $u_y$ for each of the ultrasonic wave emission unit 2 in the first embodiment can be calculated as an instantaneous average flow velocity having no time difference for each of the ultrasonic wave emission unit 2.

Note that the method of calculating the local average flow velocity $u_y$ is not limited to the method of calculating the local average flow velocity $u_y$ from the difference between the flight time in a state where the measurement target fluid is not flowing and the flight time in a state where the measurement target fluid is flowing, and the local average flow velocity $u_y$ may be calculated from the difference between the respective flight times (of which, one is the flight time when the flow velocity of the measurement target fluid is added, and the other is the flight time when the flow velocity is subtracted, that is, the difference therebetween) by replacing the functions of the ultrasonic wave emission unit 2 and the ultrasonic wave reception unit 3.

Next, the flow rate calculation unit 5 calculates the local flow rate by multiplying the calculated local average flow velocity $u_y$ by the local area dA. The local area dA is an area between the ultrasonic wave emission unit 2 and the corresponding ultrasonic wave reception unit 3, and in the first embodiment, is an area calculated by a product of a vertical interval dy between the adjacent ultrasonic wave emission units 3 and the width L of the rectangular tube portion 10. Then, the local flow rate is calculated by multiplying the local area dA by the local average flow velocity $u_y$ passing through the surface corresponding to the local area dA.

Then, the flow rate calculation unit 5 calculates the intra-tube flow rate by the sum obtained by adding all the local flow rates calculated for the respective ultrasonic wave emission units. The intra-tube flow rate conforms to the definition of the flow rate Q of the measurement target fluid flowing through the rectangular tube portion 10 calculated by multiplying the local average flow velocity $u_y$ on the measurement line ML and the local average flow velocity $u_y$ by the local area dA and integrating the results in the y-axis direction.

Next, the operation of each configuration of the ultrasonic flow rate measurement device 1 for a rectangular tube portion of the first embodiment will be described.

First, the emission circuit 41 applies voltages having different frequencies and a predetermined number of cycles from each of the ultrasonic wave emission units 2 to each of the ultrasonic wave emission units 2 at the same time. In addition, the application time is transmitted to the flow rate calculation unit 5 as the emission time. At this time, as the frequency of the ultrasonic wave is higher, the beam width of the ultrasonic wave becomes narrower, and in the first embodiment, the spatial resolution in the height direction (y direction) can be increased. In addition, the shorter the number of cycles of the ultrasonic wave, the higher the spatial resolution in the width direction (x direction) can be.

The ultrasonic wave emission unit 2 emits an ultrasonic pulse by the vibration element vibrating with the voltage transmitted from the emission circuit 41. The emitted ultrasonic pulse passes through the measurement target fluid in the rectangular tube portion 10 and reaches the opposing ultrasonic wave reception unit 3.

In the ultrasonic wave reception unit 3, the vibration element vibrates by the reached ultrasonic pulse, and generates a voltage. The generated voltage is transmitted to the reception circuit 41.

The reception circuit 41 receives the voltages transmitted from the respective ultrasonic wave reception units 3, and determines whether or not the ultrasonic pulse is an ultrasonic pulse having a frequency emitted from the opposing ultrasonic wave emission unit 2 on the basis of the received voltages. Here, in a case where the ultrasonic pulses interfere with each other, it is determined whether or not an ultrasonic pulse having a frequency emitted from the opposing ultrasonic wave emission unit 2 is included by performing frequency analysis. Then, in a case where the determination result is an ultrasonic pulse emitted from the opposing ultrasonic wave reception unit 3, the time when the ultrasonic pulse of the frequency is received is transmitted to the flow rate calculation unit 5 as the arrival time in each ultrasonic wave reception unit 3.

As described above, even if the ultrasonic pulse from the opposing ultrasonic wave emission unit 2 and the ultrasonic pulse from other than the opposing ultrasonic wave emission unit 2 interfere with each other, it is possible to perform determination. Therefore, even if the interval dy in the height direction between the ultrasonic wave emission units 2 and between the ultrasonic wave reception units 3 is narrowed to an interval at which the ultrasonic pulses interfere with each other, it is possible to transmit the accurate arrival time of the ultrasonic pulse emitted from the opposing ultrasonic wave emission unit 2.

Note that, in a case where there is a possibility that the ultrasonic pulse interferes even when different frequencies are used, each of the ultrasonic wave emission units 2 may be caused to emit at slightly different timings.

The flow rate calculation unit 5 calculates the flight time of each of the ultrasonic wave emission units 2 from the emission time of each of the ultrasonic wave emission units 2 transmitted from the ultrasonic processing unit 4 and the arrival time of each of the ultrasonic wave reception units 3 facing the ultrasonic wave emission units 2. The flight time calculated here is a flight time of an ultrasonic wave passing on the measurement line ML from the ultrasonic wave emission unit 2 to the opposing ultrasonic wave reception unit 3, and is a time adjusted by the flow velocity distribution on the measurement line ML.

Therefore, the flow rate calculation unit 5 calculates a difference from the flight time in a state where the measurement target fluid is not flowing, which is measured in advance, and calculates the local average flow velocity $u_y$

from the time difference and the flight distance from the ultrasonic wave emission unit 2 to the ultrasonic wave reception unit 3. That is, the local average flow velocity $u_y$ is an average flow velocity between the ultrasonic wave emission unit 2 and the ultrasonic wave reception unit 3 (on the measurement line ML), and each average flow velocity can be obtained even if the flow velocity distribution is different for each measurement line ML.

Then, the flow rate calculation unit 5 calculates the local flow rate by multiplying the calculated local average flow velocity $u_y$ by the local area dA, and calculates the intra-tube flow rate by the sum of the local flow rates. Since this method of calculating the intra-tube flow rate conforms to the equation rewritten for the rectangular tube portion 10 based on the definition of the flow rate, it is possible to calculate an accurate flow rate that does not require calibration or verification in principle.

As described above, the ultrasonic flow rate measurement device 1 for a rectangular tube portion of the first embodiment can achieve the following operational effects.

1. With the configuration used for the rectangular tube portion 10, the curvature of the installation surface can be eliminated, the plurality of ultrasonic wave emission units 2 and the ultrasonic wave reception units 3 facing the ultrasonic wave emission units 2 can be installed on the same straight line orthogonal to the flow direction, and the ultrasonic pulse can be passed on the plurality of measurement lines ML along the rectangular cross section C.

2. By emitting ultrasonic pulses of different frequencies from each of the ultrasonic wave emission units 2, even if there is interference of ultrasonic pulses emitted from other than the ultrasonic wave emission unit 2 facing the ultrasonic pulse received by the ultrasonic wave reception unit 3, it is possible to determine whether or not the ultrasonic pulse is emitted from the opposing ultrasonic wave emission unit 2, and it is possible to accurately calculate the local average flow velocity $u_y$ for each of the ultrasonic wave emission units 2 on the basis of a reception result of the ultrasonic pulse emitted from the opposing ultrasonic wave emission unit 2.

3. In calculating the intra-tube flow rate, the local average flow velocity $u_y$ on the plurality of measurement lines ML passing in parallel through the rectangular cross section C in the rectangular tube portion 10 is calculated, the local flow rate is calculated from each local average flow velocity $u_y$, and the intra-tube flow rate is calculated from the sum. Since the flow rate calculation method conforming to the definition of the flow rate is adopted, it is possible to perform highly accurate flow rate measurement that does not require calibration or verification.

4. Since the installation conditions are greatly relaxed by the flow rate calculation method conforming to the definition of flow rate, installation at an arbitrary place in the pipe such as immediately after the bent portion is possible, and it is also possible to cope with a change in the intra-tube flow due to a secular change, so that maintenance can be simplified.

Next, a second embodiment of the ultrasonic flow rate measurement device 1 for a rectangular tube portion according to the present invention will be described. Note that, among the configurations of the second embodiment, configurations equivalent to or corresponding to the configurations of the first embodiment described above are denoted by the same reference numerals, and not described again.

The ultrasonic flow rate measurement device 1 for a rectangular tube portion of the second embodiment is different from the first embodiment in that a rectangular tube 100, each ultrasonic wave emission unit 2, and each ultrasonic wave reception unit 3 are integrally formed, and that the measurement of the intra-tube flow rate is performed from two directions. Details will be described below.

As shown in FIG. 4, the rectangular tube 100 in the second embodiment has the rectangular tube portion 10 formed in a rectangular shape, and connecting portions 11 connectable to other pipes at both ends thereof.

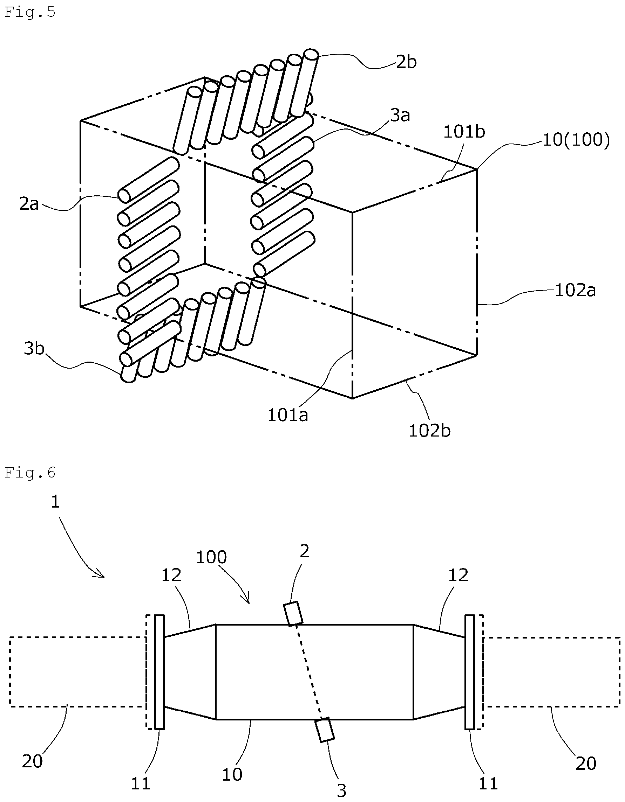

The rectangular tube portion 10 is a portion where each of the ultrasonic wave emission units 2 and each of the ultrasonic wave reception units 3 are installed, and has four surfaces formed of flat plates, and an inner periphery and an outer periphery are both formed in a rectangular shape. As shown in FIG. 5, the rectangular tube portion 10 according to the second embodiment has one side surface as a first side surface 101a, an opposing surface facing the first side surface 101a as a first opposing surface 102a, a side surface 90 degrees different from the first side surface 101a as a second side surface 101b, and an opposing side surface facing the second side surface 101b as a second opposing side surface 102b.

The connecting portion 11 is a portion for connecting to another pipe 20 (mainly a circular tube), and is formed in a donut shape in the second embodiment, and has a plurality of bolt holes for fastening and fixing to a flange portion of another pipe 20. Since the ultrasonic flow rate measurement device 1 for a rectangular tube portion according to the present invention employs a calculation method conforming to the definition of the intra-tube flow rate (a product of the average flow velocity and the area of the intra-tube cross section passing through), it is possible to measure the flow rate with high accuracy even if the tube shape is different from that of the pipe 20 and turbulence occurs in the flow such as a drift or a reverse flow.

Note that the connecting portion 11 is not limited to the flange shape, and may be appropriately selected according to the shape of the end of the pipe 20. In addition, as illustrated in FIG. 6, a straightening portion 12 that suppresses turbulence generated in the flow by gradually deforming the cross-sectional shape from a circular shape to a rectangular shape or from a rectangular shape to a circular shape may be formed between the rectangular tube portion 10 and the connecting portion 11.

The ultrasonic wave emission unit 2 in the second embodiment is formed integrally with the rectangular tube portion 10, and is installed on the second side surface 101b together with the first side surface 101a in order to emit an ultrasonic pulse from two directions.

Specifically, as shown in FIG. 5, a plurality of ultrasonic wave emission units 2a are installed in advance at the same angle with respect to the first side surface 101a in a state of being arranged in a direction orthogonal to the flow direction on the first side surface 101a, and a plurality of other ultrasonic wave emission units 2b are installed in advance at the same angle with respect to the second side surface 101b in a state of being arranged in a direction orthogonal to the flow direction on the second side surface 101b.

In addition, the ultrasonic wave reception unit 3 in the second embodiment is formed integrally with the rectangular tube portion 10, and is installed on the second opposing side surface 102b together with the first opposing side surface 102a in order to receive the ultrasonic pulse emitted from two directions. Specifically, as illustrated in FIG. 5, a plurality of ultrasonic wave reception units 3a are installed on the first opposing side surface 102a in advance in a state of being arranged at positions facing the plurality of ultrasonic wave emission units 2a installed on the first side surface 101a, and the plurality of other ultrasonic wave reception units 3b are installed on the second opposing side surface 102b in advance in a state of being arranged at positions facing the plurality of other ultrasonic wave emission units 2b installed on the second side surface 101b.

The ultrasonic processing unit 4 in the second embodiment causes each of the ultrasonic wave emission units 2a and the ultrasonic wave emission units 2b to emit ultrasonic pulses having different frequencies from each other. Specifically, the frequencies of the ultrasonic pulses emitted from the respective ultrasonic wave emission units 2a installed on the first side surface 101a and the frequencies of the ultrasonic pulses emitted from the respective ultrasonic wave emission units 2b installed on the second side surface 101b are different from each other. By setting all the frequencies to different frequencies in this manner, even if the ultrasonic pulses emitted from the ultrasonic wave emission units 2a and the ultrasonic wave emission units 2b interfere with the ultrasonic wave reception units 3a and the ultrasonic wave reception units 3b installed on other opposing side surfaces due to reflection by the inner wall of the rectangular tube portion 10 or the like, it is possible to determine whether or not the ultrasonic pulses are the ultrasonic pulses emitted from the opposing ultrasonic wave emission units 2a and ultrasonic wave emission units 2b.

Note that the frequencies of the ultrasonic pulses emitted from the respective ultrasonic wave emission units 2a and the respective ultrasonic wave emission units 2b are not limited to different frequencies. In a case where reflection by the inner wall of the rectangular tube portion 10 does not need to be considered, a combination of the frequencies of the respective ultrasonic wave emission units 2a installed on the first side surface 101a and a combination of the frequencies from the respective ultrasonic wave emission units 2b installed on the second side surface 101b may be the same.

Then, the flow rate calculation unit 5 in the second embodiment calculates a first intra-tube flow rate based on the local average flow velocity $u_y$ calculated for each of the plurality of ultrasonic wave emission units 2a on the first side surface 101a by a method conforming to the definition of intra-tube flow rate as in the first embodiment. In addition, a second intra-tube flow rate is calculated based on the local average flow velocity $u_y$ calculated for each of the other plurality of ultrasonic wave emission units 2b installed on the second side surface 101b having different directions. Then, an average value of the first intra-tube flow rate and the second intra-tube flow rate is calculated as the intra-tube flow rate.

As described above, the ultrasonic flow rate measurement device 1 for a rectangular tube portion of the second embodiment has the same effect as that of the first embodiment, and can also have an effect of being easily connected to another pipe 20. In particular, even if the flow is disturbed due to a shape difference or the like with respect to the pipe 20 to be connected, the intra-tube flow rate can be measured with high accuracy, and the pipe 20 to be connected can be freely selected.

In addition, in the second embodiment, the first intra-tube flow rate and the second intra-tube flow rate are measured from two directions, and the intra-tube flow rate is calculated from the average value thereof, whereby the measurement accuracy can be enhanced.

That is, while the average flow velocity on the measurement line ML can obtain a continuous measurement result in principle, there is a technical limit to downsizing of the vibration element of the ultrasonic transducer used in the ultrasonic wave reception unit 2 and the like, and the interval dy or the like of the measurement line ML cannot be infinitely reduced. Therefore, by performing measurement from directions different from each other by 90 degrees, a continuous measurement result is obtained in the y direction, so that the limit of downsizing of the vibration element of the ultrasonic transducer can be compensated and the measurement accuracy can be improved.

Note that the ultrasonic flow rate measurement device for a rectangular tube portion according to the present invention is not limited to the above-described embodiments, and can be appropriately changed. For example, when the flow rate is measured from one direction of the rectangular tube 10 as in the first embodiment, the ultrasonic flow rate measurement device 1 for a rectangular tube portion may be integrally formed with the rectangular tube 10. Conversely, when the flow rate is measured from two directions of the rectangular tube 10 as in the second embodiment, the ultrasonic flow rate measurement device 1 for a rectangular tube portion may be installed (clamped on) from two directions with respect to an existing rectangular tube.

**Claims**

1. An ultrasonic flow rate measurement device for a rectangular tube portion, the ultrasonic flow rate measurement device comprising:

   an ultrasonic wave emission unit that is installed on one side surface of the rectangular tube portion and emits an ultrasonic pulse toward a measurement target fluid in the rectangular tube portion;
   an ultrasonic wave reception unit that receives the ultrasonic pulse having passed through the measurement target fluid in the rectangular tube portion;
   an ultrasonic processing unit that executes processing of emitting the ultrasonic pulse in the ultrasonic wave emission unit and processing of receiving the ultrasonic pulse in the ultrasonic wave reception unit; and
   a flow rate calculation unit that calculates an average flow velocity of the measurement target fluid flowing in the rectangular tube portion based on a reception result of the ultrasonic pulse received by the ultrasonic wave reception unit, and calculates an intra-tube flow rate by multiplying the average flow velocity by a cross-sectional area of the rectangular tube portion, wherein
   a plurality of the ultrasonic wave emission units are arranged on a same straight line orthogonal to a flow direction on the one side surface and installed at a same angle with respect to the one side surface,
   a plurality of the ultrasonic wave reception units are installed at positions respectively facing the plurality of ultrasonic wave emission units on an opposing side surface facing the one side surface,
   the ultrasonic processing unit causes each of the ultrasonic wave emission units to emit ultrasonic pulses having different frequencies from each other, determines whether or not the ultrasonic pulse received by the ultrasonic wave reception unit is an ultrasonic pulse emitted from the opposing ultrasonic wave emission unit on the basis of the frequency of the ultrasonic pulse, and transmits a reception result to the flow rate calculation unit when the ultrasonic pulse is the ultrasonic pulse emitted from the opposing ultrasonic wave emission unit, and
   the flow rate calculation unit calculates a local average flow velocity for each of the ultrasonic wave emission units on the basis of the reception result of the ultrasonic pulse transmitted from the ultrasonic processing unit for each of the ultrasonic wave reception units, and calculates the intra-tube flow rate by a sum of local flow rates obtained by multiplying the local average flow velocity by a local area for each of the ultrasonic wave emission units.

2. The ultrasonic flow rate measurement device for a rectangular tube portion according to claim 1, wherein

   the one side surface on which the plurality of ultrasonic wave emission units is installed is defined as a first side surface, the opposing side surface on which the plurality of ultrasonic wave reception units are installed is defined as a first opposing side surface, a side surface different from the first side surface by 90 degrees is defined as a second side surface, and a side surface facing the second side surface is defined as a second opposing side surface,
   the plurality of other ultrasonic wave emission units are arranged on a same straight line orthogonal to the flow direction on the second side surface and are installed at a same angle with respect to the second side surface,
   the plurality of other ultrasonic wave reception units are installed at positions facing the plurality of other ultrasonic wave emission units on the second opposing side surface, respectively, and
   the flow rate calculation unit calculates, as the intra-tube flow rate, an average value of a first intra-tube flow rate calculated based on a local average flow velocity of each of the plurality of ultrasonic wave emission units on the first side surface and a second intra-tube flow rate calculated based on a local average flow velocity of each of the plurality of other ultrasonic wave emission units on the second side surface.

3. The ultrasonic flow rate measurement device for a rectangular tube portion according to claim 1 or 2, comprising

   a rectangular tube having the rectangular tube portion formed in a rectangular shape and connecting portions connectable to other pipes at both ends of the rectangular tube portion, wherein
   the rectangular tube portion in the rectangular tube and each of the ultrasonic wave emission units are integrally installed, and the rectangular tube portion and each of the ultrasonic wave reception units are integrally installed.

Fig.1

Fig.2

Fig.3

Fig.4

Fig.5

2b

3a

101b

10(100)

2a

102a

3b

101a

102b

Fig.6

1

12

100

2

12

11

10

3

11

20

20

Europäisches
Patentamt

European
Patent Office

Office européen
des brevets

# EUROPEAN SEARCH REPORT

Application Number

EP 24 21 1340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP H05 223608 A (TOKIMEC INC) 31 August 1993 (1993-08-31) * paragraphs [0019] - [023,]; claims 1-4; figures 1,3 * | 1-3 | INV. G01F1/66 G01F1/667 |
| A | US 6 089 104 A (CHANG HAK SOO [KR]) 18 July 2000 (2000-07-18) * column 1, line 60 - column 4, line 64; figures 1-6 * | 1-3 | |
| A | EP 0 935 798 B1 (PANAMETRICS [US]) 19 January 2005 (2005-01-19) * page 5, lines 43-47; figures 1a,1e,3b,6 * * paragraphs [0033], [0054], [0094] * | 1-3 | |
| A | US 2020/200578 A1 (VAN NEER PAUL LOUIS MARIA JOSEPH [NL] ET AL) 25 June 2020 (2020-06-25) * paragraphs [0038], [0053]; claim 1; figures 1-9 * | 1-3 | |
| A | JP S53 120467 A (TOKYO KEIKI KK) 20 October 1978 (1978-10-20) * figures 1-9 * | 1-3 | TECHNICAL FIELDS SEARCHED (IPC) G01F |
| A | CN 114 858 227 A (BEIJING AUTOMIC SCIENCE&TECHNOLOGY CO LTD) 5 August 2022 (2022-08-05) * figures 1-7 * | 1-3 | |
| A | US 5 952 583 A (CHANG HAK SOO [KR]) 14 September 1999 (1999-09-14) * column 1, line 14 - column 2, line 62; claim 1; figures 1,11,12 * * column 11, line 21 - column 12, line 47 * | 1-3 | |

The present search report has been drawn up for all claims

| Place of search | Date of completion of the search | Examiner |
|---|---|---|
| The Hague | 1 April 2025 | Rambaud, Dilek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1340

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | | Publication date |
|---|---|---|---|---|---|
| JP H05223608 | A | 31-08-1993 | NONE | | |
| US 6089104 | A | 18-07-2000 | DE | 19722140 A1 | 11-12-1997 |
| | | | JP | 2935833 B2 | 16-08-1999 |
| | | | JP | H10104039 A | 24-04-1998 |
| | | | KR | 970075850 A | 10-12-1997 |
| | | | RU | 2138782 C1 | 27-09-1999 |
| | | | US | 6089104 A | 18-07-2000 |
| EP 0935798 | B1 | 19-01-2005 | DE | 69732300 T2 | 13-04-2006 |
| | | | EP | 0935798 A1 | 18-08-1999 |
| | | | JP | 4107685 B2 | 25-06-2008 |
| | | | JP | 2001527639 A | 25-12-2001 |
| | | | US | 6047602 A | 11-04-2000 |
| | | | WO | 9819296 A1 | 07-05-1998 |
| US 2020200578 | A1 | 25-06-2020 | EP | 3450930 A1 | 06-03-2019 |
| | | | EP | 3676573 A1 | 08-07-2020 |
| | | | US | 2020200578 A1 | 25-06-2020 |
| | | | WO | 2019045561 A1 | 07-03-2019 |
| JP S53120467 | A | 20-10-1978 | NONE | | |
| CN 114858227 | A | 05-08-2022 | NONE | | |
| US 5952583 | A | 14-09-1999 | CA | 2277626 A1 | 16-01-2001 |
| | | | CN | 1281149 A | 24-01-2001 |
| | | | DE | 19933473 A1 | 15-02-2001 |
| | | | KR | 20000001368 A | 15-01-2000 |
| | | | RU | 2194949 C2 | 20-12-2002 |
| | | | US | 5952583 A | 14-09-1999 |

EPO FORM P0459

For more details about this annex : see Official Journal of the European Patent Office, No. 12/82

**REFERENCES CITED IN THE DESCRIPTION**

**Patent documents cited in the description**

- JP 2023035287 A
- JP 6321316 B
- JP H5223608 A